# EUROPEAN PATENT APPLICATION

(11) **EP 4 485 257 A1**
(43) Date of publication of application: **01.01.2025**
(21) Application number: 23182724.7
(22) Date of filing: 30.06.2023
(51) Int. Cl.: G06F 21/62, G06F 21/71, G06F 12/14, G06F 21/79

(54) **SECURITY MECHANISM FOR CUSTOM INSTRUCTIONS**

(71) Applicant: Siemens AG Österreich, 1210 Wien (AT)
(72) Inventor: Cech, Christian, 2483 Ebreichsdorf (AT); Chilku, Bekim, 1190 Wien (AT); Fischer, Bernhard, 2122 Wolkersdorf im Weinviertel (AT); Hinterstoisser, Thomas, 2102 Bisamberg (AT); Matschnig, Martin, 3430 Tulln (AT)
(74) Representative: Siemens Patent Attorneys

(57) **Abstract**

Present invention concerns integrated circuitry (300, 310, 320) adapted to provide a set of custom instructions, CIs, the integrated circuitry (300, 310, 320) further being adapted to execute a CI of the set of CIs conditional on an access parameter associated to the CI and/or set of CIs being set.

The invention also concerns associated methods and devices.

## Description

Present invention concerns integrated circuity, processing circuitry and a method of processing source code, in particular in the context of providing security for Custom Instructions.

### Background of the Invention

In many types of processing circuitries, e.g., such as used in FPGAs (Field Programmable Gate Arrays), next to a standardized instructions set, a set of additional, client-specific or Custom Instructions (CI) may be provided. Such CIs may be provided in a hardware extension, which may be added to a standardized circuitry. CIs may be provided to allow improved performance, e.g., for specific tasks or applications, and/or customers. Usually, such CI are proprietary, and/or intended for use by a select users, e.g., the developer of the CIs, and/or select clients.

### Disclosure of the Invention

A problem underlying the invention consists in providing an improved technique to facilitate security for custom instructions, e.g., to prevent unauthorized users from using the CIs.

The invention solves the given problem by means of subject-matter defined in enclosed independent claims. Dependent claims describe preferred embodiments.

There is disclosed integrated circuitry adapted to provide a set of custom instructions, CIs. The integrated circuitry further is adapted to execute a CI of the set of CIs conditional on an access parameter associated to the CI and/or set of CIs being set. This facilitates limiting access to the CI and/or set of CIs.

It may be considered that the integrated circuitry may be and/or may represent a hardware extension for processing circuitry, and/or is implemented as part thereof. Such a hardware extension may allow, e.g., upgrading hardware and/or circuitry, e.g., of standardized and/or procured hardware.

The integrated circuitry may be adapted to access and/or to read out a memory location associated to the access parameter and/or may be adapted to check a value stored in a memory location, e.g., to determine whether the access parameter is set or not set. Integrated circuitry may be adapted to check a memory location and/or value stored therein. Executing an instruction conditional on a parameter like access parameter may refer to the instruction being executed if the parameter is set and/or has a specific value (and/or the memory location stores the corresponding value), and/or not being executed if the parameter is not set.

In general, an access parameter being set may indicate and/or refer to a parameter having a specific value, or flag or bit, or bit sequence; and/or a specific value, or flag or bit, or bit sequence being stored in a memory location, e.g., representing the access parameter and/or its value. If the memory location stores a different value, or no value, the access parameter may be indicated as unset. A memory location may in particular be or comprise a register and/or a location in a cache and/or location in a Random Access Memory (RAM).

Integrated circuitry may be adapted to execute instructions of an application, wherein the instructions comprising one or more CIs of the set of CIs. The instructions of an application (application instructions) may correspond to, and/or represent, and/or be, instructions executable by the integrated circuitry and/or processing circuitry comprising the integrated circuitry; for example, application instructions may be in assembler and/or interpreter-language, or may be machine-executable, e.g., according to an instruction set of processing circuitry. An application may in general represent software.

In general, a CI, or more than one or all, of the set of CIs (or of one or more subsets) may be executed in a protected memory and/or protected mode; the integrated circuitry may be adapted to execute a CI, or more than one or each CI, of the set of CIs (or of one or more subsets) in a protected memory and/or protected mode. Protected memory may be access-limited and/or controlled, and/or may be separate and/or compartmentalized, e.g., physically and/or logically, of other memory, e.g., freely accessible memory. A protected mode may represent a mode in which access to specific memory area/s and/or functions and/or instructions, in particular CIs, may be limited and/or restricted, e.g., to one or more specific user/s and/or to the application. In some cases, a protected mode may be a privileged mode and/or kernel mode.

It may in general be considered that execution of the CI is blocked if the access parameter is not set. Blocking execution may comprise ending the application, and/or providing an error message or signal.

There is also described a method of processing a source code to be executed by processing circuitry, the processing circuitry being adapted to provide a set of custom instructions, CI. The method comprises obtaining the source code. The method also comprises processing the source code to provide application instructions corresponding to instructions executable by the processing circuitry. For code of the source code corresponding to use of a CI of the set of CIs, an instruction setting an access parameter indicating access to the CI and/or set of CIs is provided in the application instructions. This facilitates providing an application that is enabled to use CIs, e.g., in the context of integrated circuitry as described herein. The method may be performed by a computer and/or computer system and/or processing circuitry, e.g., utilizing a processing tool. A processing tool may in general be or comprise a compiler, or compiler suite, or an interpreter, or interpreter suite, or a debugger. A user may not be aware of the method being performed; it may be obscured, e.g., by the processing tool. It may in general be considered that the processing circuitry may comprise integrated circuitry as described herein, in particular integrated circuitry adapted to execute a CI of a set of CIs conditional on an access parameter associated to the CI or set of CIs.

The method and/or processing the source code may comprise including an instruction for unsetting the access parameter after execution of the CI. In general, the application instructions may include a corresponding instruction. Integrated circuitry may in general be adapted to unset the access parameter, e.g., after execution of the CI. Unsetting may comprise changing a parameter value, and/or deleting a parameter value, and/or changing a value in a memory location, and/or freeing a memory location, and/or making a memory location inaccessible. Setting and/or unsetting an access parameter may be part of a set of CIs, and/or utilize instruction/s of processing circuitry, which may be standard instruction/s and/or not part of a set of CIs (non-CI instructions).

It may be considered that the instruction setting the access parameter is to be executed before executing a plurality of CIs, and/or the instruction unsetting the access parameter is to be executed after execution of the plurality of CIs. The plurality of CIs may be in series, e.g., without non-CI instructions in between, or with interspersed non-CI instructions. An instruction setting and/or unsetting an access parameter may be performed in a same thread and/or by the same processor or core or controller than one or more CIs, or by a different one, e.g., in a parallelized operation. In some cases, it may be considered that executing CIs may be limited to one thread and/or core, and/or that integrated circuitry or processing circuitry is adapted correspondingly.

Moreover, a computer program product is described, the computer program product comprising instructions (which may be application instructions) causing processing circuitry and/or a computer system to perform a method as described herein, e.g., when executed by the processing circuitry and/or computer system. The computer program product may represent, and/or correspond to, and/or be implemented as, a processing tool. The computer program product may comprise one or more modules for each action, e.g., a module for obtaining and a module for processing.

There is also considered processing circuitry and/or a computer system comprising integrated circuitry as described herein, and/or being adapted to set and/or unset an access parameter indicating access to a custom instruction of a set of custom instructions provided by the integrated circuitry. The processing circuitry and/or computer system may be adapted to execute a computer program product as described herein, e.g., a second computer program product.

Further, a computer program product is considered, which may be referred to as second computer program product. The (second) computer program product comprises instructions causing processing circuitry, and/or integrated circuitry, and/or a computer system, as described herein to set and/or unset an access parameter indicating access to a custom instruction, CI, of a set of CIs provided by the processing circuitry and/or integrated circuitry and/or computer system. The computer program product may be an application, and/or comprise application instruction, which may comprise one or more CIs; the application may be processed and/or be the result of processing source code according to a method described herein. The computer program product may comprise one or more modules for each action, e.g., a module for setting and/or a module for unsetting the access parameter.

A storage medium storing a computer program product as described herein is also proposed. The storage medium may comprise and/or be implemented as one or more memories and/or have different parts or components of the program product stored on different memories or media. The storage medium may be non-transitory and/or non-volatile.

In general, executing an instruction may be in the context of executing an application, e.g., in compiled form and/or in an interpreter. Processing circuity and/or integrated circuitry may be adapted to execute instructions, e.g., of an application and/or CI. Executable instructions may be according to a set of instructions of circuitry, e.g., a standard instruction set or a set of CIs. An application instruction may be represented or representable may an assembler instruction or code, and/or an opcode. Executing an application and/or one or more application instructions may be considered as a form of processing performed by a computer system and/or processing circuitry and/or integrated circuitry; this processing may be separate and/or different and/or performed by a different system than processing of source code.

Processing source code may be performed based on, and/or comprising utilizing a processing tool. Processing source code may comprise providing an application and/or application instructions based on the source code, which may be executable and/or correspond to executable instructions. The method may comprise one or more additional actions, e.g., of pre-processing, and/or post-processing, and/or optimizing, and/or inputting, and/or outputting.

Application instructions and/or executable instructions may in general correspond to low-level instructions, for example in an assembler format and/or interpretable format and/or machine-executable format (e.g., directly executable by integrated circuitry and/or processing circuitry and/or computer system, and/or based on interaction with an operating system and/or firmware) and/or as opcode. An application may comprise application instructions and/or parameters; an application instruction may comprise and/or associated to one or more parameters, and/or a command. The parameter/s may comprise one or more input parameter/s, and/or one or more output parameter/s. Application instructions based on processing the source code may represent and/or constitute an application or application suite.

Source code may comprise code and/or instructions in a high-level language, e.g., a programming language like C or C++ or LISP or Python. Code or instructions from source code may be processed to corresponding application instructions, e.g., one or more non-CIs and/or CIs. Code or instruction (code instruction) of the code may be mappable to, and/or correspond to, application instructions; the processing and/or processing tool may provide the application instructions according to a mapping. Source code may comprise one or more code parts and/or code instructions that may be mappable to, and/or correspond to, one or more CIs of the set of CIs.

The set of CIs may be provided on a different component and/or chip and/or circuitry than an instruction set of processing circuitry like a non-CI set or standard set of instructions, e.g., a hardware extension. The different components may be connected and/or connectable via an interface and/or interface/s.

An access parameter may be considered associated to a CI or set of CIs, e.g., by indicating and/or allowing access and/or execution of one or more CIs, and/or the set of CIs, and/or associated memory and/or functions and/or memory space. An access parameter indicating access to a CI may be considered to a parameter value and/or memory location storing such allowing and/or facilitating access and/or execution of the CI, e.g., when checked or read by integrated circuitry.

An instruction of setting and/or unsetting an access parameter may be added over code in the source code, e.g., automatically without corresponding code instruction.

The method may be performed by processing circuitry or a computer system for which the application instructions or application is intended (target), or by a different one, for example in the context of cross-compiling. An instruction for setting and/or unsetting may comprise, and/or represent, one or more instructions. Processing may in general comprise compiling and/or interpreting.

A set of CIs may comprise one or more CIs. A CI may provide, and/or represent, and/or be implemented as, a hardware implementation of an instruction, or a combination of instructions, e.g., of a non-CI set of instructions. In some cases, a CI may represent one or more instructions providing a new functionality, and/or provided accelerated performance of one or more instructions, for example for tasks in which such instructions are used with high frequency.

An access parameter may represent, and/or comprise, one or more parameters. An instruction setting and/or unsetting an access parameter may be a separate instruction, and/or be implemented with a CI, e.g., by providing or indicating the access parameter for a call of the CI to be executed, e.g., in addition to one or more parameters for the functionality of the CI. Unsetting an access parameter may be performed when returning from a call to the CI, e.g., when providing one or more return values of the CI.

In general, the same access parameter or value and/or memory location may be used for, and/or associated to, a plurality of different CIs of the set of CIs. Alternatively, or additionally, different parameters and/or memory locations and/or values may be associated to different CIs or subset of CIs. This may provide an additional security effect. A set or subset of instructions in general may comprise one, or more than one, instructions. In particular, a set or subset of CIs may comprise or consist of one CI, or more than one CIs. Different subsets may comprise or consist of different numbers of CIs.

An access parameter may be associated to a memory, and/or a memory location. A memory location may be represented and/or referred to, and/or be referable to, by a memory address. The memory and/or location and/or address may be assumed to be known or obtainable by the integrated circuity, as well as the processing tool and/or computer program product. For example, memory and/or location and/or address may be hard-coded and/or hard-wired. It may be considered that processing and/or checking and/or reading out a memory location may comprise determining the address and/or memory location and/or memory. For example, processing source code may comprise such determining, and/or including a reference to a determined memory and/or location and/or address, e.g., encoded and/or appended and/or included into the application or application instructions and/or as separate information. The reference may explicitly indicate the memory and/or location and/or address, and/or may provide a seed for determining the memory and/or location and/or address. For example, it may be a seed for a pseudo-random function and/or memory function, which in particular may facilitate determining the memory and/or location and/or address. In some cases, processing may comprise providing an instruction storing the reference in a second memory and/or location and/or address; integrated circuity may be adapted for reading out the second memory and/or location and/or address, and/or to determine the memory and/or location and/or address of the access parameter based on reading out the second memory and/or location and/or address.

A second memory and/or location and/or address may be predefined, e.g., in a processing tool and/or the integrated circuity, in particular a hardware extension. It may be considered that the second memory and/or location and/or address, and/or the memory and/or location and/or address of the access parameter are provided as parameters for the processing and/or processing tool. The integrated circuitry may in general be adapted to determine the address(es), e.g., in a way complementarily to the processing - for example, if a function is used, the integrated circuitry may be adapted to evaluate such a function.

In some variants, the memory and/or location and/or address of the access parameter, and/or a second memory and/or location and/or address, may be provided internally in the integrated circuitry, e.g., implemented as memory in a hardware extension. It may be considered that the memory and/or location and/or address may be external to the integrated circuity or hardware extension.

To an instruction, in particular a CI, there may be associated one or more parameters, which may be provided when executing the instruction. The access parameter may be one of such parameters.

A computer system may comprise processing circuitry, and/or computer system and/or processing circuitry may comprise one or more computers, and/or may comprise one or more components and/or may be a distributed, e.g., interconnected via suitable communication interfaces. Different components may perform different actions, e.g., based on exchanging information via the interface/s. A computer system in general may be and/or comprise one or more computers and/or controllers and/or processing circuitries.

The method may especially be carried out, completely or in part, by electronic execution means like a computer system. To these ends, the method may be formulated as a computer program product with program code means (e.g., application instructions and/or instructions). Advantages or features of the method may apply to devices and vice versa.

### Brief Summary of the Enclosed Figures

The above-described properties, features and advantages of present invention as well as the way they are achieved will be made clearer and better understandable in the light of the following discussion, making reference to exemplary embodiments shown in accompanying figures, in which
- Figure 1: shows an exemplary flow diagram of an inventive method;
- Figure 2: shows a schematic of an example of the invention; and
- Figure 3: shows a schematic of another example of the invention.

### Detailed Exemplary Embodiments of the Invention

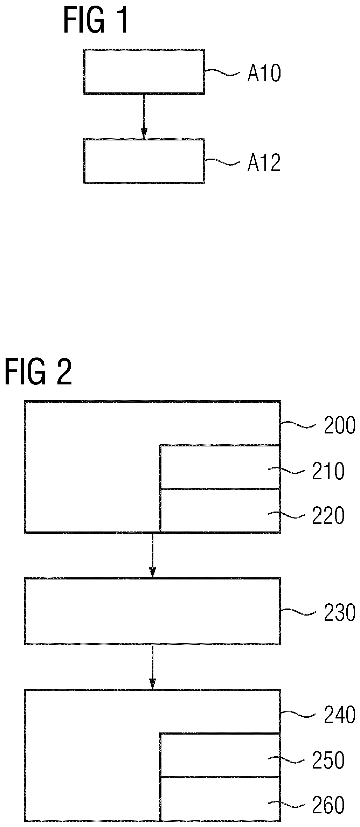

Figure 1 shows a flow diagram of an exemplary method of processing a source code to be executed by processing circuitry. The processing circuitry is adapted to provide a set of custom instructions, CI. For example, the CIs may be provided to be called and/or used when executing an application. The method comprises an action A10 of obtaining the source code, which may generally represent an application or application suite, in particular in a high-level language. Obtaining may comprise reading one or more files and/or memories and/or storage media, on which the source code may be stored, e.g., in one part or multiple parts.

An action A12 comprises processing the (obtained) source code to provide application instructions corresponding to instructions executable by the processing circuitry. Processing may be (at least partly) in parallel with obtaining, e.g., an already obtained part of the source code may be processed while another part or other parts still have to be, and/or currently are, obtained. Processing may comprise providing an application, and/or application instructions, as output, and/or executing the application and/or application instructions (e.g., if interpreting the source code). For code of the source code corresponding to use of a CI of the set of CIs, an instruction setting an access parameter indicating access to the CI and/or set of CIs is provided in the application instructions. Proving an output may comprise providing the application and/or application instructions in one or more files, and/or memories and/or media. The application may be executable by processing circuitry and/or a computer system and/or an operating system. The application or application instruction may be executable by the system processing the source code, or a different one; the processing system may be the target system, or the target system may be different from the processing system.

An instruction unsetting the access parameter may in general be included and/or provided for the application instruction, e.g., implicit for the instruction setting the parameter, or as a separate instruction.

Processing may comprise formatting and/or further processing the application instructions and/or output of the processing to be executable by a target system, e.g., providing a file header and/or format information.

Figure 2 shows a schematic of an example of the invention. A source code 200 (e.g., representing an application) may comprise code 210 corresponding to non-CI instructions; such code 210 may in general be processable to provide application instructions which are not part of the set of CIs, and/or which are non-CIs. The source code 200 also comprises code 220 corresponding to one or more CIs of a set of CIs, such code 220 may in general be processable to provide application instructions which correspond to one or more CIs of the set of CIs. The source code 200 may in general be considered input for processing, and/or a processing tool 230, which may in particular be a compiler or compiler suite. The processing tool 230 processes the source code 200, e.g., as discussed in regard to Figure 1. As output of the processing by the processing tool, an application 240 is provided. The application 240 comprises application instructions 250. There may is also provided an access parameter, associated to one of the instructions 250 and/or to be set by an additional instruction.

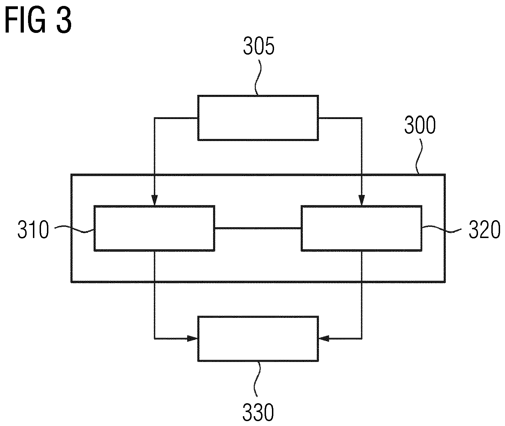

Figure 3 shows an exemplary computer system 300, which may be a target system for executing an application. The application may be a result and/or output of processing as shown in Figure 1 and/or 2, e.g., corresponding to application 240; the application may provide an input 305 for execution and/or processing by the computer system 300.

The computer system 300 in the example comprises processing circuitry 310, which may for example comprise or provide a standard set of instructions (a set of instructions, and/or may comprise or represent one or more ALUs (Arithmetic Logic Unit). Integrated circuitry 320 is provided as hardware extension, and is adapted to provide a set of custom instructions, CIs. Integrated circuitry 320 further is adapted to execute a CI of the set of CIs conditional on an access parameter associated to the CI and/or set of CIs being set. In particular, integrated circuity 320 checks whether an access parameter is set when processing circuitry 310 intends to execute a CI of input 305; if the parameter is not set, execution may be blocked, and/or execution of the application and/or execution flow may be stopped and/or interrupted. Output 330 is provided based on executing and/or checking, e.g., a result provided by executing the CI instruction/s, or information corresponding to stopping and/or interrupting, e.g., an error message, and/or exiting the application.

In general, circuitry may comprise integrated circuitry. Processing circuitry may comprise one or more processors and/or controllers (e.g., microcontrollers), and/or ASICs (Application Specific Integrated Circuitry) and/or FPGAs (Field Programmable Gate Array) and/or SOCs (System-on-a-Chip), or similar. It may be considered that processing circuitry comprises, and/or is (operatively) connected or connectable to one or more memories or memory arrangements or storage media, which may be non-transitory. A storage medium or memory arrangement may comprise one or more memories. A memory may be adapted to store digital information. Examples for memories comprise volatile and non-volatile and/or non-transitory memory, and/or Random Access Memory (RAM), and/or Read-Only-Memory (ROM), and/or magnetic and/or optical memory, and/or flash memory, and/or hard disk memory, and/or EPROM or EEPROM (Erasable Programmable ROM or Electrically Erasable Programmable ROM). Integrated circuitry may in general provide a set of instructions; the instructions provided may be called and/or used, and/or be available for calling and/or using, e.g., when executing an application and/or processing input, e.g., to provide an output.

Even though present invention has been illustrated and explained in detail above with reference to the preferred embodiments, the invention is not to be construed as limited to the given examples. Variants or alternate combinations of features given in different embodiments may be derived by a subject matter expert without exceeding the scope of present invention.

Independent of the grammatical term usage, individuals with male, female or other gender identities are included within the term.

### Reference List

- 200: Source code
- 210: Non-CI code part
- 220: CI code part
- 230: Processing tool
- 240: Application
- 250: Application instructions
- 260: Access parameter
- 300: Computer system
- 305: Input
- 310: Processing circuitry/ALU
- 320: Integrated circuitry/ HW extension
- 330: Output

## Claims

1. Integrated circuitry (300, 310, 320) adapted to provide a set of custom instructions, CIs, the integrated circuitry (300, 310, 320) further being adapted to execute a CI of the set of CIs conditional on an access parameter (260) associated to the CI and/or set of CIs being set.

2. Integrated circuitry according to claim 1, wherein the integrated circuitry is and/or represents a hardware extension (320) for processing circuitry (300, 310), and/or is implemented as part thereof.

3. Integrated circuitry according to one of the preceding claims, wherein the integrated circuitry (300, 310, 320) is adapted to read out a memory location associated to the access parameter.

4. Integrated circuitry according to one of the preceding claims, further being adapted to execute instructions (250) of an application (240), the instructions (250) comprising one or more CIs of the set of CIs.

5. Integrated circuitry according to one of the preceding claims, further being adapted to execute a CI of the set of CIs in a protected memory and/or protected mode.

6. Integrated circuitry according to one of the preceding claims, wherein execution of the CI is blocked if the access parameter (260) is not set.

7. Method of processing a source code to be executed by processing circuitry (300, 310, 320), the processing circuitry (300, 310, 320) being adapted to provide a set of custom instructions, CI, the method comprising:
- obtaining (A10) the source code (200);
- processing (A12) the source code (200) to provide application instructions (240, 250) corresponding to instructions executable by the processing circuitry (300, 310, 320);
- wherein for code (220) of the source code (200) corresponding to use of a CI of the set of CIs, an instruction setting an access parameter (260) indicating access to the CI and/or set of CIs is provided in the application instructions (240, 250).

8. Method according to claim 7, wherein the processing circuitry (300, 310) comprises integrated circuitry (300, 310, 320) according to one of claims 1 to 6.

9. Method according to one of claims 7 or 8, wherein the method and/or processing (A10) the source code (200) comprises including an instruction for unsetting the access parameter after execution of the CI.

10. Method according to one of claims 7 to 9, wherein the instruction setting the access parameter (260) is to be executed before executing a plurality of CIs, and/or the instruction unsetting the access parameter (260) is to be executed after execution of the plurality of CIs.

11. Computer program product comprising instructions causing processing circuitry (310, 320) and/or a computer system (320) to perform a method according to one of claims 7 to 10, for example when executed by the processing circuitry (310, 320) and/or computer system (300).

12. Processing circuitry (300, 310, 320) comprising integrated circuitry (320) according to one of claims 1 to 6 adapted to set and/or unset an access parameter (260) indicating access to a custom instruction, CI, of a set of custom instructions provided by the integrated circuitry (320) .

13. Computer program product (240) comprising instructions causing processing circuitry (300, 310, 320) according to claim 12 to set and/or unset an access parameter (260) indicating access to a custom instruction, CI, of a set of CIs provided by the processing circuitry (300, 310, 320).

14. Storage medium storing a computer program product according to one of claims 11 or 13.
